# EUROPEAN PATENT SPECIFICATION

(11) **EP 0 429 804 B1**
(45) Date of publication and mention of the grant of the patent: **01.02.1995**
(21) Application number: 90119184.1
(22) Date of filing: 05.10.1990
(51) Int. Cl.: B62D 43/04

(54) **Support device for the spare wheel of a vehicle**
Haltervorrichtung für das Ersatzrad eines Fahrzeuges
Dispositif de support pour roue de secours de véhicule

(30) Priority: 01.12.1989 IT 5351789 U
(43) Date of publication of application: 05.06.1991
(73) Proprietor: IVECO FIAT S.p.A., 10156 Torino (IT)
(72) Inventor: Lussignoli, Giuseppe, I-25100 Brescia (IT)
(74) Representative: Jorio, Paolo

(56) References cited:
- EP-A- 0 114 147
- DE-A- 3 118 504
- US-A- 4 449 881
- US-A- 4 632 288

## Description

The present invention relates to a support device for a spare wheel, particularly, but not exclusively, for an industrial vehicle.

Known devices of this type substantially comprise a support on which the spare wheel is fixed in use by bolts, which support is hinged at one of its ends on the vehicle chassis and can be attached at its opposite end to the chassis by fastening means.

The removal of the spare wheel consequently takes place by disengaging these fastening means and allowing the support to rotate under its own weight about the hinge axis until it bears on the ground; the operator can then gain access to the space between the spare wheel and the chassis, remove the bolts securing the wheel to the support and remove the wheel from the support.

Since industrial vehicle manufacturers are tending to construct vehicles whose chassis is increasingly lowered towards the road surface, the use of a known device of the type described briefly above is problematic since, once the support is lowered, there is not enough space between the wheel and the chassis for the access of the operator and the removal of the bolts fastening the wheel to the support.

This problem has been partially solved by means of a support device as disclosed in US-A-4 449 881, the features of which form the basis of the preamble of Claim 1; in particular, such a support device includes a support adapted to receive the spare wheel and hooking means for attaching a first end portion of the support to the chassis of the vehicle in a readily disengageable manner and adapted to allow the support to be completely removed from the chassis; the hooking means further allow the support to rotate between a first position in which the support is raised from the ground and substantially horizontal and a second position in which the support is lowered and is adapted to bear on the ground in the vicinity of a second end portion thereof. The support device disclosed in US-A-4 449 881 further includes means for fastening the support to the chassis in the first position of the support, such means essentially comprising a winch and a locking bar.

Documents EP-A-0 114 147 and DE-A-3 118 504 disclose similar devices including a spare wheel support which is hooked to and completely removable from the vehicle chassis.

An object of the present invention is to provide an improvement in devices of the type described above, and particularly to means thereof for fastening the spare wheel support to the vehicle chassis.

This object is achieved by means of a spare wheel support device as claimed in Claim 1.

The present invention is set out in further detail in the following description of two preferred embodiments given purely by way of non-limiting example with reference to the attached drawings, in which:
Fig. 1 is a front elevation of a first embodiment of a support device for a spare wheel of an industrial vehicle in accordance with the present invention;
Fig. 2 is a plan view of the device of Fig. 1;
Fig. 3 is a section along the line III-III of Fig. 2, on an enlarged scale;
Fig. 4 is a section along the line IV-IV of Fig 3;
Fig. 5 shows a detail of Fig. 1 on an enlarged scale and partly in section;
Fig. 6 is a section along the line VI-VI of Fig. 5;
Fig. 7 shows a detail of a second embodiment of a support device for a spare wheel of an industrial vehicle in accordance with the present invention, and corresponding to the detail of Fig. 5;
Fig. 8 is a section along the line VIII-VIII of Fig. 7.

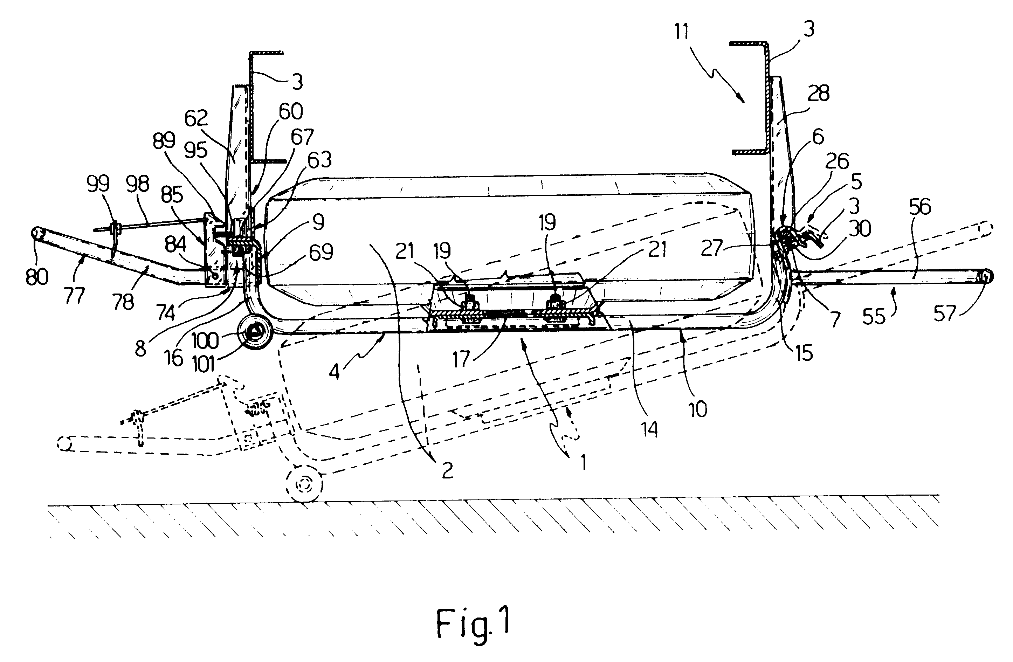

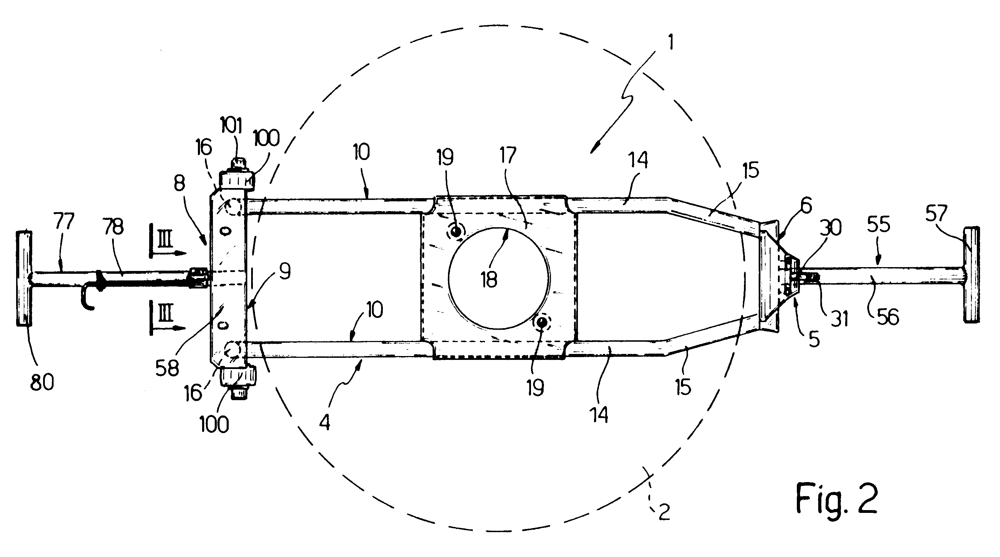

Figs. 1 and 2 show a support device for a spare wheel 2 of an industrial vehicle overall by 1, the vehicle having a chassis 11, the side members 3 of which are shown in section.

The device 1 substantially comprises a support 4 on which the wheel 2 is adapted to be housed and secured, means 5 for attaching a first end portion 6 of the support 4 to a side member 3 of the vehicle chassis 11 defining a hinge spindle 7 for the support 4 and means 8 for fastening a second end portion 9 of the support 4 to the other side member 3.

In more detail, the support 4 is formed by a pair of tubular, shaped bars 10 which have respective rectilinear and parallel intermediate portions 14 which are horizontal in use and respective first lateral portions 15 which converge and are upwardly folded in the vicinity of the first end portion 6 to which they are welded, and respective second lateral portions 16 which are upwardly folded and parallel and are butt-welded to the second end portion 9.

A substantially square plate 17 is welded to the intermediate portions 14 of the bars 10; two screws 19, whose shanks extend upwardly and are adapted to engage with respective fastening holes of the wheel 2, are welded in the vicinity of respective opposite corners of this plate 17 which has a central relief hole 18. The wheel is fastened by nuts 21 screwed onto the screws 19.

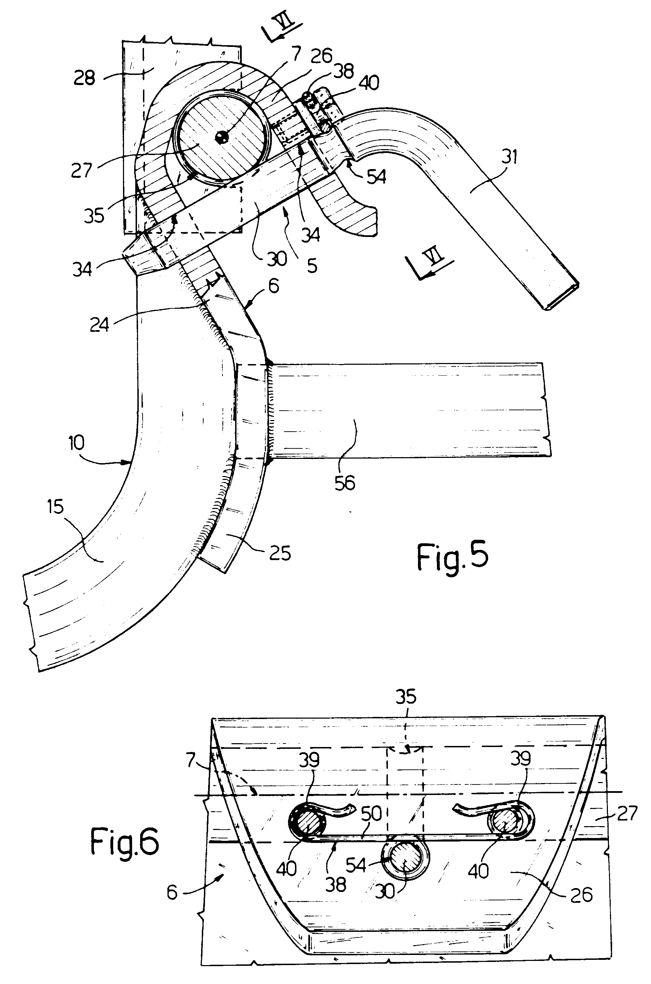

As is clearly shown in Figs. 5 and 6, the first end portion 6 of the support 4 is formed by a shaped sheet metal bracket having a plane intermediate portion 24 to which the ends of the portions 15 of the obliquely cut bars 10 are butt welded, a lower curved portion 25, a short section of which follows the outer profile of the portions 15 and is welded thereto, and an upper portion 26.

According to the present invention, the hinge attachment means 5 comprise the upper portion 26 of the bracket 6 which is substantially hook-shaped, and a fixed, horizontal and cylindrical pin 27 on which the portion 26 is hooked. The pin 27, forming the hinge spindle 7 for the support 4, is held at its ends by a pair of support uprights 28 welded to the corresponding side member 3 of the chassis.

A gudgeon pin 30 provided with a handle 31 at 90° is housed in a tangential direction with respect to the pin 27 in respective holes 34 in the portion 26 and in the portion 24 of the bracket 6 in order to prevent the accidental disengagement of the bracket 6 from the pin 27. This gudgeon pin 30 engages with an annular groove 35 provided on the pin 27 thereby ensuring the correct positioning of the bracket 6 in the axial direction with respect to the pin 27.

The gudgeon pin 30 is held in the position described above by a C-shaped spring 38 (Fig. 6) comprising two end hooks 39 which engage with respective pins 40 screwed onto the portion 26 of the bracket 6 and a central portion 50 which is substantially rectilinear in the undeformed condition and is snap-locked in an annular groove 54 of the gudgeon pin 30.

A handle 55 comprising a bar 56 extending towards the exterior of the support 4 from the bracket 6 and a transverse end handle 57 is welded to the lower portion 24 of the bracket 6.

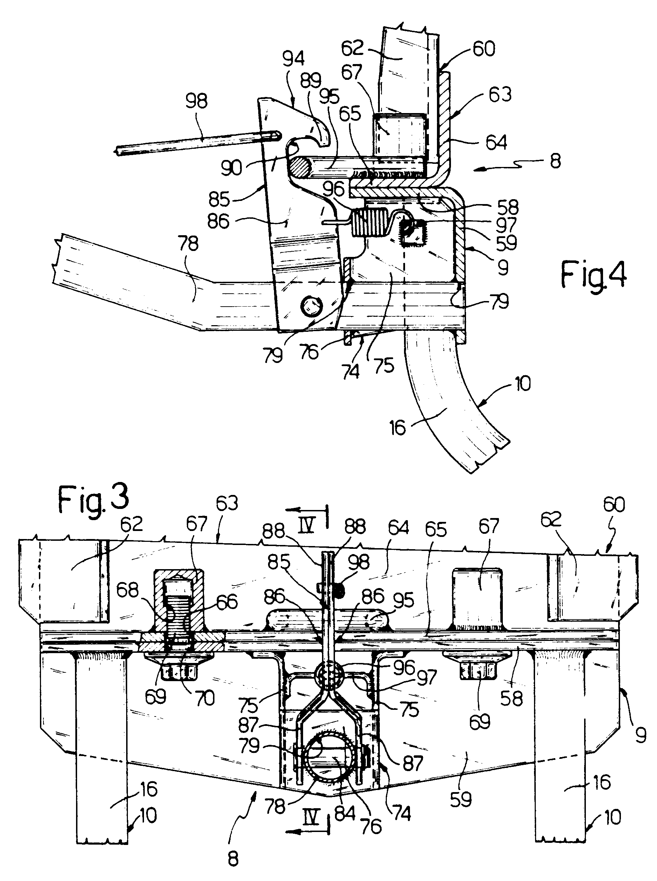

As Figs. 3 and 4 show, the second end portion 9 of the support 4 is formed by an L-shaped section comprising a horizontal wall 58 and a vertical wall 59 extending downwards from an inner edge thereof.

The second lateral portions 16 of the bars 10 are disposed in contact with the wall 59 and are welded laterally thereto and butt-welded to the wall 58.

The fastening means 8 comprise a bracket 60 formed by a pair of uprights 62 welded to the corresponding side member 3 (Fig. 1) and by a lower crossbar 63, also L-shaped, having a vertical wall 64 welded at its ends to the lower ends of the uprights 62 and a horizontal wall 65 provided with a pair of holes 66.

Respective cylindrical bushings 67 provided with a threaded blind hole 68 are provided on the wall 65 at the location of these holes 66.

The support 4 is fixed to the bracket 60 by a pair of screws 69 engaging with respective holes 70 in the horizontal wall 58 of the section 9 and screwed into the bushings 67.

The central zone of the section 9 has welded to it a support bracket 74 of sheet metal which comprises, in a rigid manner, a pair of lateral walls 75 which are spaced from one another and welded to the wall 58 of this section 9 and a front wall 76 parallel to the vertical wall 59 thereof. This bracket 74 supports a second handle 77 of the support 4, which handle is formed by a bar 78 of elongate shape which is upwardly folded and is housed and welded in respective holes 79 in the walls 76 and 59 and by an end transverse handle 80.

A hook 85 which is disposed in a substantially vertical direction in use is hinged on the bar 78 of the handle 77 by a transverse pin 84; this hook 85 is formed by two shaped plates 86 provided with respective lower portions 87 mounted on opposite sides with respect to the bar 78 and articulated thereon, and respective upper portions 88 welded facing one another. The hook 85 has, on its side facing the bracket 60, a downwardly curved tooth 89, provided between a recess 90 provided on this side of the hook 85 and an upper edge 94 thereof, inclined downwardly on the side of the support 4.

The hook 85 is held In contact with a C-shaped stop member 95 welded on the horizontal wall 65 of the bracket 60 by a helical traction spring 96 attached to the hook 85 and to a plate 97 welded between the side walls 75 of the bracket 74. The member 95 cooperates with a base surface of the recess 90 of the hook 85, which is lower than the tooth 89, so that the hook 85 can be moved away from the member 95 against the action of the spring 96 without interference between the latter and the tooth 89. For this purpose a stay 98 of metal wire is anchored in the vicinity of an upper end of the hook 85 and is guided in an axially slidable manner in a support 99 (Fig. 1) rigid with the bar 78 of the handle 77.

The support 4 is finally provided with a pair of rollers 100 mounted to rotate at the ends of a pin 101 fixed to the bars 10 in the connection zone between the intermediate portions 14 and the lateral portions 16 of these bars.

The device 1 operates as follows.

Fig. 1 shows the operating position of the support 4 in continuous lines, in which the bracket 6 is hooked on the pin 27 and the opposite section 9 is screwed to the bracket 60. The support 4 is therefore rigid with the vehicle chassis and the wheel 2 is housed therein in a horizontal position.

The support 4 is dismantled and the spare wheel removed by firstly unscrewing the screws 69, following which the support 4 rotates for a short distance about the pin 27 under the effect of gravity until the tooth 89 of the hook 85 engages with the C-shaped stop member 95. This allows the operator to remove the screws 69 without needing to bear the weight of the support 4 and in particular of the wheel 2 so as to prevent it from crashing to the ground.

By slightly raising the support 4 by means of the handle 77, it is then possible to rotate the hook 85 by acting on the stay 98 so that the tooth 89 is brought out of the trajectory of engagement with the stop member 95 and support 4 can rotate about the pin 27 under its own weight.

It is now possible to place the support 4, which remains hooked on the pin 27 by means of the bracket 6, on the ground on the rollers 100.

At this point, on the other side of the vehicle, the gudgeon pin 30 is withdrawn against the action of the spring 38 and the support 4 is raised, by the handle 55, unhooking the bracket 6 from the pin 27.

The support 4 can then be removed from the vehicle giving very easy access to the wheel 2 and can be dismantled by unscrewing the nuts 21. The mounting of the spare wheel 2 on the support 4 and the latter on the vehicle chassis is completely obvious from the above description and entails carrying out the steps described above in the reverse order.

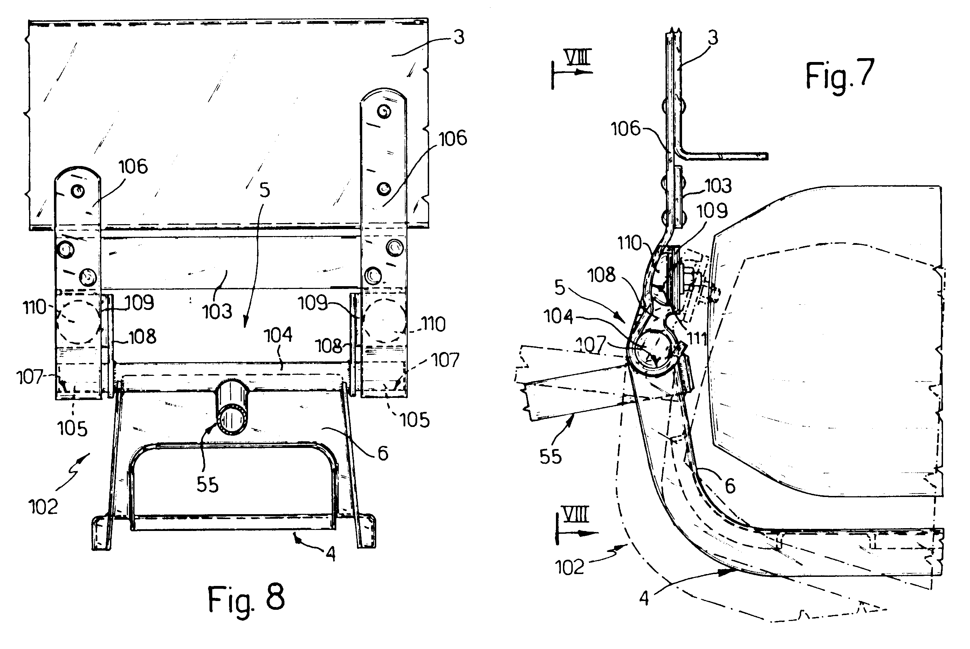

Figs. 7 and 8 show part of a support device 102 for a spare wheel according to a different embodiment of the present invention.

The parts of the device 102 bear the same reference numerals as the corresponding parts of the device 1 described above; the device 102 is very similar to the previous device and only differences are therefore described in detail.

The device 102, provided with a support 4 of shaped sheet metal, differs from the device 1 substantially in respect of the embodiment of the attachment means 5. In particular, a transverse pin 104 with a horizontal axis which projects from the end portion 6 with respective end portions 105 is welded to the end portion 6 of the substantially plane support 4.

Two brackets 106, snap-locking downwardly and shaped substantially as hooks which are connected by a reinforcing crossbar 103 are secured to the side member 3. The brackets 106 end in respective semi-cylindrical seats 107 which are substantially upwardly open and are adapted to receive the end portions 105 of the pin 104. In the vicinity of the respective ends 105 there are welded to the pin 104 two shaped plates 108 provided with respective portions 109 folded along a vertical plane substantially parallel to the axis of the pin 104. Two pads 110 of elastomer material formed as spherical caps which are adapted to cooperate with respective concave seats 111 provided in the brackets 106 are fixed to these portions.

The means 8 for fastening the second end portion 9 of the support 4 (not shown) are embodied in a substantially identical manner to those of the device 1 described above.

The operation of the device 102 is completely identical to that of the device 1 and is not therefore described. It should be noted that when the support 4 is mounted on the vehicle, the pin 104 is firstly housed in the respective seats 107 and the support 4 is then raised to attach it to the opposite end by means of the above-mentioned fastening means 8. During this lifting operation, the pads 110 are brought into contact with the respective brackets 106 and are elastically compressed within the seats 11 with the dual aim of preventing the accidental upward withdrawal of the pin 104 and of damping the vibrations of the device 102 in operation.

The advantages which can be achieved are evident from the description of the characteristic features of the devices 1 and 102 embodied in accordance with the present invention.

In particular, these devices allow the rapid mounting and dismantling of the spare wheel and provide easy access to the latter even when the space available below the vehicle chassis is limited.

It is lastly evident that modifications and variants can be made to the devices 1 and 102 described above without departing from the scope of the present invention, as defined in the claims.

## Claims

1. A support device (1) for a spare wheel (2) of an automobile vehicle, particularly an industrial vehicle, of the type comprising:
- a support (4) adapted to receive said spare wheel (2),
- means (19,21) for fastening said spare wheel (2) to said support (4),
- honking means (26) for attaching a first end portion (6) of said support (4) to the chassis (11) of said vehicle in a readily disengageable manner and adapted to allow the support (4) to be completely removed from the chassis (11), said hooking means further (26) allowing the support (4) to rotate between a first position in which the support (4) is raised from the ground and substantially horizontal and a second position in which the support (4) is lowered and is adapted to bear on the ground in the vicinity of a second end portion (9) thereof, and
- means (8) for fastening the support (4) to the chassis (11) in said first position of said support (4),
characterised in that said means (8) for fastening said support (4) to said chassis (11) comprise bracket means (60) rigid with the chassis (11), fastening means (69) for rigidly connecting said second end portion (9) of said support (4) to said bracket (60) means, and auxiliary means (85,95) for connection between said support (4) and said bracket means (60) when said fastening means (69) are disengaged.

2. A device as claimed in claim 1, characterized in that the hooking means comprise a pin (27, 104) with a horizontal axis and at least one hook-shaped member (6, 106) adapted to receive this pin (27), one of these being rigid with the chassis (11) and the other being rigid with the support (4).

3. A device as claimed in claim 2 or 3, characterized in that it comprises holding means (30; 110, 111) adapted to prevent the accidental disengagement of the hook-shaped member (6, 106) and the pin (27, 104).

4. A device as claimed in claim 3, characterized in that the pin (27) is rigid with the chassis (11), the hook-shaped member being formed by a shaped end portion (6) of the support (4) and in that the holding means comprise a gudgeon pin (30) which can be inserted in respective seats (34) of the hook-shaped portion 6 in a substantially tangential position with respect to the pin (27).

5. A device as claimed in claim 3, characterized in that the pin (104) is rigid with the support (4), the hook-shaped member being formed by a bracket (106) anchored to the chassis (11) and in that the holding means comprise at least one elastically deformable pad (110) rigid with the pin (104) and a corresponding concave seat (111) provided in the bracket (106).

6. A device as claimed in claim 5, characterized in that it comprises two brackets (106) adapted to receive respective end portions (105) of the pin (104) and in that the brackets (106) are provided with respective seats (111) for respective pads (110) borne by plates (108) connected to the pin (104) in the vicinity of the end portions (105).

7. A device as claimed in any of the preceding claims, characterized in that the auxiliary connection means comprise a hook (85) borne by the support (4) and adapted to engage with a corresponding stop member (95) rigid with the bracket (60).

8. A device as claimed in any of the preceding claims, characterized in that said fastening means comprise at least one screw (69).

9. A device as claimed in any one of, the preceding claims, characterized in that the support (4) comprises two handles (55, 77) rigid with the respective end portions (6, 9).

10. A device as claimed in claim 11, characterized in that the hook (85) is hinged on the handle (77) rigid with the second end portion (9) and in that the auxiliary attachment means also comprise elastic means (96) adapted to hold said hook (85) in a position adapted for engagement with the stop member (95) and a stay (98) in order to disengage said hook against the action of said elastic means (96).

11. A device as claimed in any one of the preceding claims, characterized in that the support (4) comprises a pair of rollers (100) disposed in the vicinity of the second end (9) of the support (4) and adapted to cooperate with the ground in the second position of the support (4).

## Patentansprüche

1. Haltevorrichtung (1) für ein Ersatzrad (2) eines Kraftfahrzeugs, insbesondere eines gewerblichen Fahrzeugs, mit:
- einer Halterung (4), die geeignet ist, das Ersatzrad (2) aufzunehmen;
- einer Einrichtung (19,21) zum Befestigen des Ersatzrades (2) an der Halterung (4);
- einer Hakeneinrichtung (26) zum Anbringen eines ersten Endbereichs (6) der Halterung (4) an dem Fahrgestell (11) des Fahrzeugs in einer leicht lösbaren Art und Weise, die es gestattet, die Halterung (4) vollständig von dem Fahrgestell (11) zu lösen, welche Hakeneinrichtung weiterhin (26) eine Drehung der Halterung zwischen einer ersten Position, in der die Halterung (4) vom Boden abgehoben ist und im wesentlichen waagerecht steht, und einer zweiten Position, in der die Halterung (4) abgesenkt ist und sich auf dem Boden in der Nähe ihres zweiten Endbereichs (9) abstützt, gestattet; und
- einer Einrichtung (8) zum Befestigen der Halterung (4) an dem Fahrgestell (11) in der ersten Position der Halterung (4),
dadurch **gekennzeichnet**, daß die Einrichtung (8) zum Befestigen der Halterung (4) an dem Fahrgestell (11) einen Ansatz (60), der starr mit dem Fahrgestell (11) verbunden ist, eine Befestigungseinrichtung (69) zum starren Verbinden des zweiten Endbereichs (9) der Halterung (4) mit dem Ansatz (60) und eine Hilfseinrichtung (85,95) zur Verbindung zwischen der Halterung (4) und dem Ansatz (60) bei gelöster Befestigungseinrichtung (69) umfaßt.

2. Vorrichtung nach Anspruch 1, dadurch **gekennzeichnet**, daß die Hakeneinrichtung einen Stift (27,104) mit einer waagerechten Achse und wenigstens einem hakenförmigen Glied (6,106) umfaßt, das diesen Stift aufnehmen kann, wobei eines dieser Teile starr mit dem Fahrgestell (11) und das andere starr mit der Halterung (4) verbunden ist.

3. Vorrichtung nach Anspruch 2 oder 3, dadurch **gekennzeichnet**, daß sie eine Halteeinrichtung (30;110,111) umfaßt, die vorgesehen ist zum Verhindern eines unbeabsichtigten Lösens des hakenförmigen Gliedes (6,106) und des Stiftes (27,104).

4. Vorrichtung nach Anspruch 3, dadurch **gekennzeichnet**, daß der Stift (27) starr mit dem Fahrgestell (11) verbunden ist, und daß das hakenförmige Glied durch einen geformten Endbereich (6) der Halterung (4) gebildet ist und daß die Halteeinrichtung einen Bolzen (30) umfaßt, der in entsprechende Sitze (34) des hakenförmigen Bereichs (6) in einer im wesentlichen tangentialen Position in bezug auf den Stift (27) eingefügt ist.

5. Vorrichtung nach Anspruch 3, dadurch **gekennzeichnet**, daß der Stift (104) starr mit der Halterung (4) verbunden ist, daß das hakenförmige Glied durch einen Ansatz (106) gebildet ist, der mit dem Fahrgestell (11) verbunden ist und daß die Halteeinrichtung wenigstens ein elastisch verformbares Kissen (110) umfaßt, das mit dem Stift (104) und einem entsprechenden konkaven Sitz (111) in dem Ansatz (106) verbunden ist.

6. Vorrichtung nach Anspruch 5, dadurch **gekennzeichnet**, daß sie zwei Ansätze (106) umfaßt, die geeignet sind zur Aufnahme der jeweiligen Endbereiche (105) des Stiftes (104), und daß die Ansätze (106) jeweils mit Sitzen (111) für die jeweiligen Kissen (110) versehen sind, die durch Platten (108) gehalten werden, die mit dem Stift (104) in der Nähe der Endbereiche (105) verbunden sind.

7. Vorrichtung nach einem der vorhergehenden Ansprüche. dadurch **gekennzeichnet**, daß die Hilfsbefestigungseinrichtung einen Haken (85) umfaßt, der durch die Halterung (4) getragen wird und mit einem entsprechenden Anschlag (95) zusammenwirken kann, der starr mit dem Ansatz (60) verbunden ist.

8. Vorrichtung nach einem der vorhergehenden Ansprüche, dadurch **gekennzeichnet**, daß die Befestigungseinrichtung wenigstens eine Schraube (69) umfaßt.

9. Vorrichtung nach einem der vorhergehenden Ansprüche, dadurch **gekennzeichnet**, daß die Halterung (4) zwei Handgriffe (55,77) umfaßt, die starr mit den jeweiligen Endbereichen (6,9) verbunden sind.

10. Vorrichtung nach Anspruch 11, dadurch **gekennzeichnet**, daß der Haken (85) scharnierförmig an dem Handgriff (77) angeordnet ist, der starr mit dem zweiten Endbereich (9) verbunden ist, und daß die Hilfsbefestigungseinrichtung ebenfalls eine elastische Einrichtung (96) umfaßt, die den Haken (85) in einer Position halten kann, die zum Eingriff mit dem Anschlag (95) und einem Steg (98) zum Lösen des Hakens entgegen der Wirkung der elastischen Einrichtung geeignet ist.

11. Vorrichtung nach einem der vorhergehenden Ansprüche, dadurch **gekennzeichnet**, daß die Halterung (4) zwei Rollen (100) umfaßt, die in der Nähe des zweiten Endes (9) der Halterung (4) angeordnet und vorgesehen sind zum Zusammenwirken mit dem Boden in der zweiten Stellung der Halterung (4).

## Revendications

1. Dispositif de support (1) pour la roue de secours (2) d'un véhicule automobile, en particulier celle d'un véhicule industriel, du type comprenant:
- un support (4) adapté pour recevoir ladite roue de secours (2),
- des moyens (19, 21) permettant de fixer ladite roue de secours (2) sur ledit support (4),
- des moyens d'accrochage (26) permettant de joindre une première partie terminale (6) dudit support (4) au châssis (11) dudit véhicule, d'une manière permettant de la désengager aisément et adaptés pour permettre au support (4) d'être enlevé entièrement du châssis (11), lesdits moyens d'accrochage (26) permettant en outre au support (4) de pivoter entre une première position, dans laquelle le support (4) est relevé du sol et orienté sensiblement horizontalement, et une deuxième position, dans laquelle le support (4) est abaissé et est adapté pour reposer sur le sol, à proximité d'une deuxième partie terminale (9) de ce support, et
- des moyens (8) permettant de fixer le support (4) sur le châssis (11) dans ladite première position dudit support (4),
caractérisé en ce que lesdits moyens (8) de fixation dudit support (4) sur ledit châssis (11) comprennent des moyens attaches (60) rigidement reliés au châssis (11), des moyens de fixation (69) permettant de relier rigidement ladite seconde partie terminale (9) dudit support (4) auxdits moyens attaches (60), et des moyens auxiliaires (85, 95) destinés à établir une connexion entre ledit support (4) et lesdits moyens attaches (60) lorsque lesdits moyens de fixation (69) sont désengagés.

2. Dispositif selon la revendication 1, caractérisé en ce que les moyens d'accrochage comprennent une broche (27, 104) ayant un axe horizontal, et au moins un élément (6, 106) en forme de crochet destiné à recevoir cette broche (27), l'un d'eux étant relié rigidement au châssis (11), et l'autre étant relié rigidement au support (4).

3. Dispositif selon la revendication 1 ou 2, caractérisé en ce qu'il comprend des moyens de maintien (30; 110, 111) destinés à empêcher le désengagement involontaire de l'élément (6, 106) en forme de crochet et de la broche (27, 104).

4. Dispositif selon la revendication 3, caractérisé en ce que la broche (27) est rigide par rapport au châssis (11), l'élément en forme de crochet étant formé par une partie terminale façonnée (6) du support (4), et en ce que les moyens de maintien comprennent un tourillon de crosse (30) qui peut être inséré dans des sièges correspondants (34) de la partie (6) en forme de crochet, dans une position sensiblement tangentielle par rapport à la broche (27).

5. Dispositif selon la revendication 3, caractérisé en ce que la broche (104) est rigide par rapport au support (4), l'élément en forme de crochet étant formé par une attache (106) ancrée sur le châssis (11), et en ce que les moyens de maintien comprennent au moins un plot (110) pouvant être déformé élastiquement, rigide par rapport à la broche (104), et un siège correspondant concave (111) prévu dans l'attache (106).

6. Dispositif selon la revendication 5, caractérisé en ce qu'il comprend deux attaches (106) adaptées pour recevoir les parties terminales correspondantes (105) de la broche (104), et en ce que les attaches (106) sont pourvues de sièges correspondants (111) prévus pour des plots respectifs (110) portés par des plaques (108) reliées à la broche (104) à proximité de ses parties terminales correspondantes (105).

7. Dispositif selon l'une quelconque des revendications précédentes, caractérisé en ce que les moyens de connexion auxiliaire comprennent un crochet (85) porté par le support (4) et adapté pour entrer en engagement avec un élément d'arrêt correspondant (95) rigidement relié à l'attache (60).

8. Dispositif selon l'une quelconque des revendications précédentes, caractérisé en ce que lesdits moyens de fixation comprennent au moins une vis (69).

9. Dispositif selon l'une quelconque des revendications précédentes, caractérisé en ce que ledit support (4) comporte deux poignées (55, 77) rigides par rapport aux parties terminales respectives (6, 9).

10. Dispositif selon la revendication 11, caractérisé en ce que le crochet (85) est articulé sur la poignée (77) rigidement reliée à la deuxième partie terminale (9), et en ce que les moyens de fixation auxiliaire comportent aussi des moyens élastiques (96) adaptés pour maintenir ledit crochet (85) dans une position lui permettant de rester en engagement avec ledit élément d'arrêt (95), et une tige (98) permettant de désengager ledit crochet à l'encontre de l'action desdits moyens élastiques (96).

11. Dispositif selon l'une quelconque des revendications précédentes, caractérisé en ce que le support (4) comporte une paire de rouleaux (100) disposés à proximité de la deuxième extrémité (9) du support (4) et adaptés pour coopérer avec le sol lorsque le support (4) se trouve dans la deuxième position.
